# EUROPEAN PATENT APPLICATION

(11) **EP 4 254 216 A1**
(43) Date of publication of application: **04.10.2023**
(21) Application number: 23164845.2
(22) Date of filing: 28.03.2023
(51) Int. Cl.: G06F 16/215, G06F 16/906

(54) **METHOD AND SYSTEM FOR OBTAINING A DATASOURCE SCHEMA COMPRISING COLUMN-SPECIFIC DATA-TYPES AND/OR SEMANTIC-TYPES FROM RECEIVED TABULAR DATA RECORDS**

(30) Priority: 31.03.2022 PT 2022117896
(71) Applicant: Feedzai - Consultadoria e Inovação Tecnológica, S.A., 3030-199 Coimbra (PT)
(72) Inventor: DIAS BARATA, RICARDO JORGE, 3030-199 COIMBRA (PT); COLAÇO FERREIRA, HUGO RICARDO, 3030-199 COIMBRA (PT); BARRIGA NEGRA ASCENSÃO, JOÃO TIAGO, 3030-199 COIMBRA (PT); SANTOS RODRIGUES BIZARRO, PEDRO GUSTAVO, 3030-199 COIMBRA (PT)
(74) Representative: Patentree

(57) **Abstract**

A computer-implemented method for obtaining a datasource schema comprising column-specific data-types and/or semantic-types from received tabular data records with values arranged in rows and columns, said method including: extracting a feature vector record comprising data-type recognition features for each of one or more columns of the received input tabular records; feeding the extracted feature vector records to a pretrained type classification discriminative machine learning model; using said model for classifying each extracted feature vector record of a corresponding column of received input tabular records into an estimated data- type and/or semantic-type, respectively, of the corresponding column. It is further disclosed a computer program product, a computer system and a method for training a machine learning model for obtaining the datasource schema.

## Description

### TECHNICAL FIELD

The present disclosure relates to a computer-implemented method for estimating column-specific data types and/or semantic types from received tabular data records. This method proposes a fully automated system to assist data ingestion and understanding of tabular data for downstream Machine Learning model development.

### BACKGROUND

Recent developments in Machine Learning (ML) enable the development of high-performance models for many different domains and use-cases. With this, new challenges have arisen, among them:
1. The lack of specialists with enough experience to use best practices and make such complex algorithms work successfully.
2. The level of uncertainty in projects involving ML is large enough that trial and error is often a common strategy, resulting in repetitive and redundant tasks.
3. The cost of such projects can sometimes outbid their value proposition.

Automated Machine Learning (AutoML) is a framework to build and automate ML workflows that can cover the entire ML pipeline end-to-end, from data ingestion and preparation to modelling, evaluation, and deployment [2,3,4]. However, in order to perform these steps successfully, domain and technical knowledge about the data is required. In particular, in the case of tabular data, knowledge of attributes of columns such as their data and semantic types is essential for many of the steps of the ML pipeline. It is noted the works of Hulsebos [5] (Sherlock) and Zhang [6] (SATO), the latter being an extension of the former, extract features from each column of the dataset and train supervised ML models to achieve the same goal of semantic labelling the dataset columns.

### GENERAL DESCRIPTION

The present disclosure relates to a trainable and automated system - namely, INGEST (INtelliGEnt Semantic Type Detection) - capable of detecting column attributes in tabular data, in particular data atomic types (e.g., string, integer, float, Boolean) and semantic types (e.g., date, amount, city, country). This disclosure consists of a feature engineering toolset and multiclass classification machine learning models implemented by code executing in a processor. These components enable customization for specific column attributes or domains. Moreover, due to the proposed architecture, the tuning of the system is possible even for highly imbalanced data or a few examples.

At one level, the disclosure proposes a system and a computer-implemented method capable of detecting column attributes of tabular data, including data and semantic types. The disclosed system/method works with a low prevalence of some classes and the existence of encoded and encrypted data. In another aspect, the disclosed system and the computer-implemented method enable configuration for specific attributes and domains, making it suitable for a large variety of tabular data.

A system in accordance with the disclosure has been evaluated on seven real-world financial datasets, resulting in an average accuracy for semantic and data type detection of over 90%.

More particularly, the present disclosure concerns a computer-implemented method for obtaining a datasource schema comprising column-specific data-types and/or semantic-types from received tabular data records with values arranged in rows and columns, said method comprising: extracting a feature vector record comprising type recognition features for each of one or more columns of the received input tabular records; feeding the extracted feature vector records to a pretrained type classification discriminative machine learning model; using said model for classifying each extracted feature vector record of a corresponding column of received input tabular records into an estimated data- type and/or semantic-type, respectively, of the corresponding column.

In an embodiment, each column of received input tabular records comprises a column header and a column body; wherein the feature vector record comprises type recognition features extracted from a corresponding column header.

In an embodiment, each column of received input tabular records comprises a column header and a column body; wherein the feature vector record comprises type recognition features extracted from a corresponding column body.

In an embodiment, each column of received input tabular records comprises a column header and a column body; wherein each feature vector record comprises a concatenation of a header feature vector record and a body feature vector record; wherein the header feature vector record comprises type recognition features extracted from a corresponding column header; wherein the body feature vector record comprises type recognition features extracted from a corresponding column body.

In an embodiment, the type recognition features comprise character level features obtained from counting printable and/or special characters present in a corresponding column, in particular the character level features being obtained from counting printable and/or special characters present in a corresponding column header and/or body, in particular printable characters being all printable characters present in the corresponding column comprising punctuation, digit, letters, ASCII characters, or whitespace characters, or combinations thereof.

In an embodiment, the type recognition features comprise regex detection features obtained from calculating one or more statistics calculated from regular expression, also referred as regex, pattern matching of text elements in a corresponding column, in particular one or more statistics calculated from a binary vector of regex expression matching for each text element in the column body.

In an embodiment, the statistics comprise minimum and maximum values, mean, median, mode, range, variance, interquartile range, skewness, kurtosis, or sum, or combinations thereof.

In an embodiment, the type recognition features comprise statistical features obtained from calculating one or more statistics calculated from a corresponding column, in particular one or more statistics calculated from counting unique values and null values, counting numeric values and text values, counting characters of numeric values and of text values, counting number of words in text values, counting null values and non-null values, and/or verifying if all values are null or if all values are non-null, or in particular one or more statistics being obtained from a corresponding column header and/or body, or in particular wherein statistics comprise minimum and maximum values, mean, median, mode, range, variance, interquartile range, skewness, kurtosis, or sum, or combinations thereof.

In an embodiment, the type recognition features comprise word embedding features, obtained from fetching an embedding vector for each of one or more words present in a corresponding column from a predetermined word embedding dictionary, to obtain word embedding features, in particular the word embedding features being obtained from fetching an embedding vector for each of one or more words present in a corresponding column body and/or header.

In an embodiment, the type recognition features comprise word embedding features, obtained from fetching an embedding vector for each of one or more words present in a corresponding column from a predetermined word embedding dictionary; calculating one or more statistics from the fetched embedding vectors; and concatenating the calculated statistics to obtain the word embedding features; in particular the statistics including average, standard, deviation, median, or mode, or combinations thereof, in particular the feature vector record being the body feature vector record.

In an embodiment, if more than one word is present for each value of the corresponding column body, averaging the fetched embedding vectors for each value of the corresponding column body to obtain word embedding features.

In an embodiment, the feature vector record comprises type recognition features comprising a binary feature extracted from a header of a corresponding column, wherein said binary feature is obtained by detecting if a keyword from a predetermined ordered list of keywords is present.

In an embodiment, the computer-implemented method further comprises the step of building a database schema from the datasource schema.

It is also disclosed a computer-implemented method for training a machine learning model for obtaining a datasource schema comprising column-specific data-types and/or semantic-types from received tabular data records with values arranged in rows and columns, said method comprising: extracting a feature vector record comprising type recognition features for each of one or more columns of the received input tabular records; feeding the extracted feature vector records to a pretrained type classification discriminative machine learning model; using said model for classifying each extracted feature vector record of a corresponding column of received input tabular records into an estimated data- type and/or semantic-type, respectively, of the corresponding column.

In an embodiment, said method further comprises grouping the received input tabular records into groups defined by one or more of the columns of the received input tabular records; extracting a feature vector record comprising type recognition features for each of one or more columns and for each of group of the received input tabular records; feeding the extracted feature vector records to a pretrained type classification discriminative machine learning model; using said model for classifying each extracted feature vector record of a corresponding column of received input tabular records into an estimated data- type and/or semantic-type, respectively, of the corresponding column.

Also disclosed is a computer system for obtaining a datasource schema comprising column-specific data-types and/or semantic-types from received tabular data records with values arranged in rows and columns, said method comprising: extracting a feature vector record comprising data-type recognition features for each of one or more columns of the received input tabular records; feeding the extracted feature vector records to a pretrained type classification discriminative machine learning model; using said model for classifying each extracted feature vector record of a corresponding column of received input tabular records into an estimated data- type and/or semantic-type, respectively, of the corresponding column.

Further, disclosed is a computer program product embodied in a non-transitory computer-readable medium comprising computer program instructions, which when executed by a hardware computer processor, cause the computer processor to carry out the method of any of the embodiments.

These and other aspects, features, and advantages can be appreciated from the following description of certain embodiments and the accompanying drawing figures and claims.

### BRIEF DESCRIPTION OF THE DRAWINGS

The following figures concern embodiments for illustrating the disclosure and should not be seen as limiting the scope of invention which is defined by the recitations in the claims appended hereto and equivalents thereof.
**Figure 1** is a schematic representation of an example of overall system architecture of INGEST at detection time
**Figure 2** is a schematic representation of encoding of a dataset column to a feature vector.
**Figure 3** is a schematic representation of a detailed view of the Feature Extraction Mechanism, comprising extraction of features from the header and column values and concatenation of the different feature types.

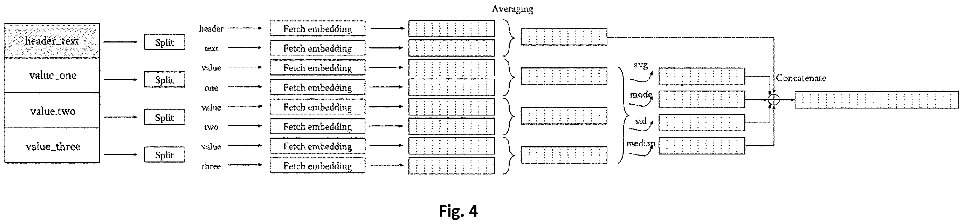

**Figure 4** is a schematic representation of a detailed view of the Feature Extraction Mechanism applied to a real example, from extraction of features from the columns header and its values preceded by concatenation of the different feature types.
**Figure 5** is a schematic representation of an embodiment of an extraction of string detection features.
**Figure 6** is a schematic representation of an embodiment of a schematic view of extraction of the application of the feature extraction mechanism for a dataset column without augmentation.
**Figure 7** is a schematic representation of an embodiment of a schematic view of extraction of the application of the feature extraction mechanism for a dataset column with augmentation through grouped extraction based on column Country.

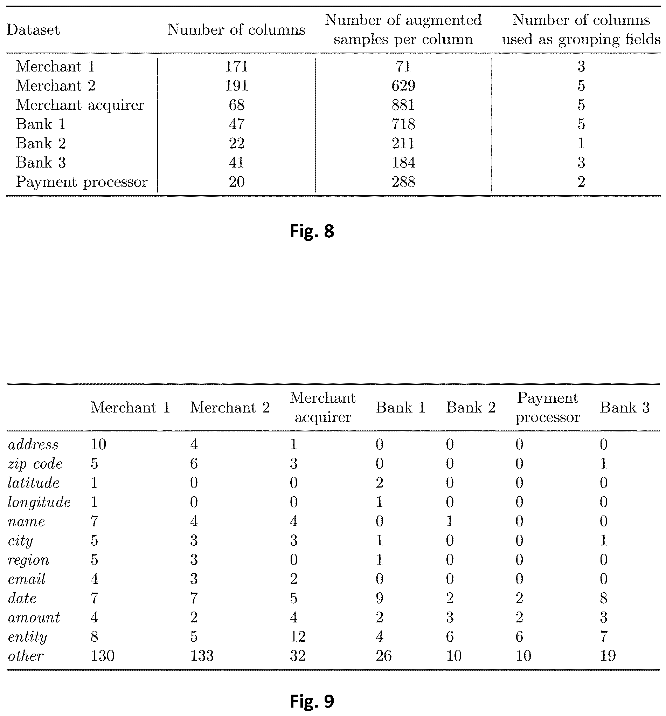

**Figure 8** is a table, Table 1, with a description of the columns in the datasets used for the experiments.
**Figure 9** is a table, Table 2, with distribution of semantic types across the datasets used in the experiments.

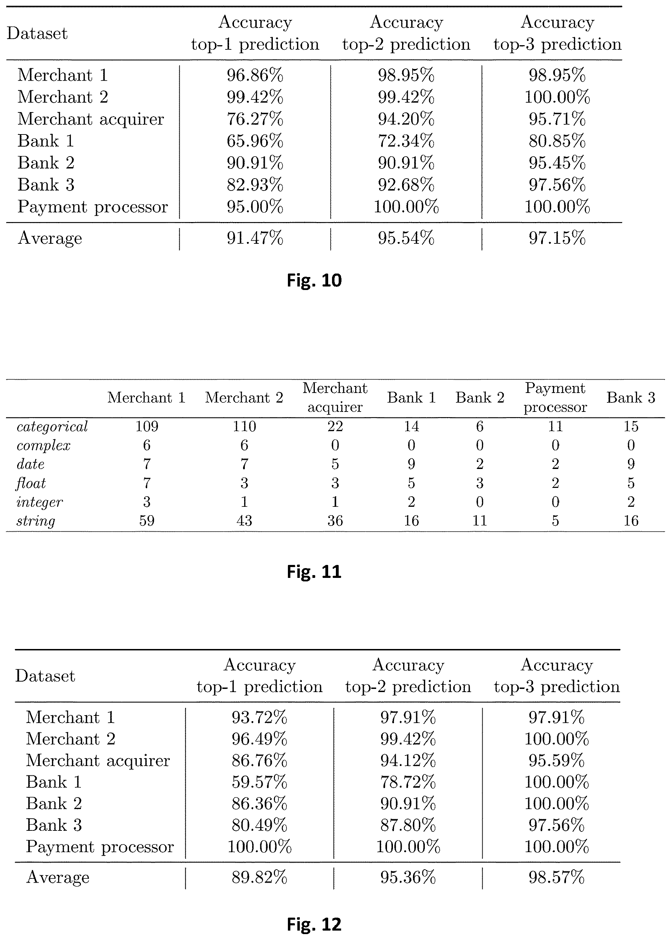

**Figure 10** is a table, Table 3, with results obtained for the semantic type detection experiment.
**Figure 11** is a table, Table 4, with distribution of data types across the datasets used in the experiments.
**Figure 12** is a table, Table 5, with results obtained for the data type detection experiment.

### DETAILED DESCRIPTION

Data ingestion and data understanding are the first and most essential steps in a Machine Learning (ML) project. In particular, identifying the data (atomic) types and semantic (meaning) types is crucial for data validation, data cleaning, feature engineering, feature selection, and ML model development. These tasks require domain knowledge and technical expertise in Data Science and ML. However, given the rapid adoption of ML in the last few years, it is increasingly common that the practitioner has the necessary business domain context but limited technical skills.

This technical gap is an opportunity to foster the automation of ML tools. Although recent advances have enabled less proficient users to leverage ML, automation has primarily focused on ML modelling and less on the data ingestion and understanding stages.

With this in mind, the present disclosure proposes a fully automated system to assist data ingestion and understanding of tabular data for downstream ML model development. The disclosure automatically detects attributes of data columns, in particular the data and semantic types. The architecture can deal with highly imbalanced data, low cardinality columns and high levels of missing values. It is also customizable for specific data and semantic types or domains.

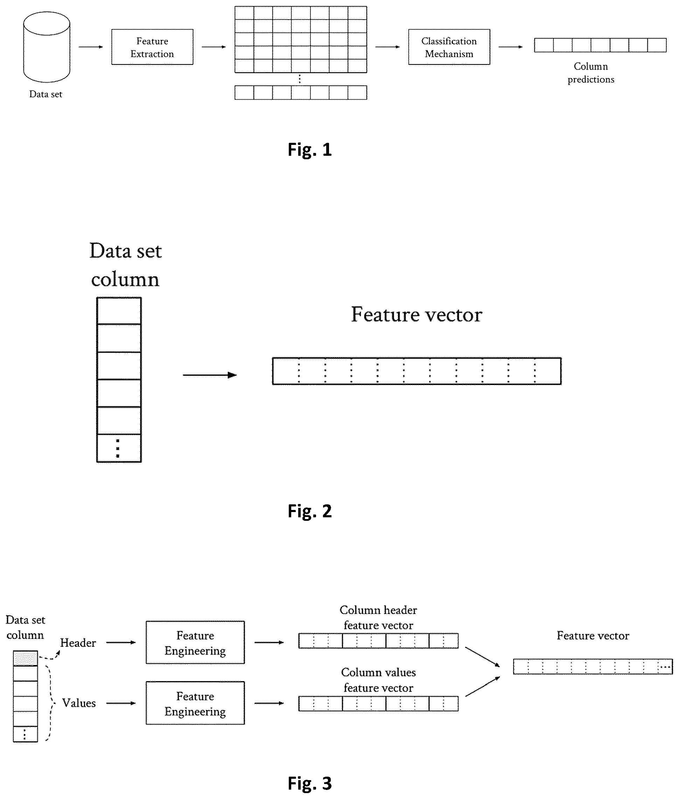

**Figure 1** shows a schematic representation of an example of the present disclosure comprising two main components: Feature Extraction and Multiclass Classification, each implemented by modules comprising code executing within a processor. These two components comprise software modules that direct a processor to interact with each other in such a way that the output of the Feature Extraction feeds the Multiclass Classification.

The present disclosure is configurable for a specific domain or set of tags. The tags are maintained in memory and managed by the software described herein and stand for the classes of the classification task. For example, the experiments we performed were run on fraud detection datasets and to support a specific protocol for feature engineering - Feedzai AutoML [1]. However, one could tune the same system to work on different data domains and tags, or even on a comprehensive range of data, to have a general-purpose tagging system. Additionally, the present disclosure can operate in conjunction with any AutoML protocol using annotation-based approaches.

The purpose of the Feature Extraction is to encode each column of the dataset into a feature vector, as in **Figure 2****.** This vector contains features extracted from the column values and the header, if available, and comprises data within the memory of the system implementing the embodiment.

Features are extracted from column values and heads separately, as illustrated in **Figure 3****.** Then, the system combines these features into a single feature vector for each column, within the memory of the system.

Three types of features are extracted from both column values and header: character level, word embeddings, and statistical features. Additionally, the system extracts String Detection features from the column header. Extraction comprises isolating these particular elements within the memory or a database for use by the software modules described herein.

The character level features include two steps. Firstly, all printable characters (e.g., all sets of punctuation, digits, ASCII letters, or whitespaces) are counted, considering every value in the column. Then, the system computes several statistics over the resulting count distributions. Among others, possible statistics include determinations made by code executing in the processor such as:
Is there any, i.e., False unless there is at least one element that is True or equivalent (e.g., non-zero or non-empty);
Are all, i.e., True unless there is at least one False element or equivalent (e.g., zero or empty);
What are the extreme values, e.g., minimum and maximum values;
What are the central tendency measures, e.g., mean, median, and mode;
What are the dispersion measures, e.g., range, variance, and interquartile range;
What is the distribution shape, e.g., skewness, kurtosis
Are there other aggregations, e.g., sum.

Word embeddings can come from several sources, such as pretrained dictionaries, including Word2vec [7] or other Natural Language Processing (NLP) models. Before fetching the embedding, the system via the code executing in the processor normalizes the string, removes strange characters, and converts all capital letters to lowercase.

The word embedding features are computed differently for the column header and values. Below, is a description of both processes.

Column header: The system is configured, via the programmed processor, fetches the embedding from a pre-trained embedding dictionary if there is a single word. Alternatively, for headers with more than one word, the system is configured to fetch the embedding for each word separately and averages the embeddings across all words to obtain the header embedding.

Column values: There is an additional step performed by the programmed processor for the column values which entails computing aggregations over the embeddings of all column values, including, but not limited to, mean, standard deviation, median, and mode, and concatenating them to the feature vector. The system is configured by code to append an additional binary feature to the embedding value indicating if any of the words are present in the embedding dictionary.

The statistical features describe the distribution of the column values. They focus on the overall value distributions, whereas character level features capture the distribution of the characters of the values of each column. Among others, possible features to be used in the analysis performed by the modules described herein include, but are not limited to:
Entropy;
Fraction of null values and unique values;
Count of cells with numeric content or text content;
Statistics on the length of numeric or text cells, e.g., mean, variance, standard deviation, minimum, maximum, skewness, or kurtosis;
Statistics on the count of special characters per cell;
Statistics on the number of words in each cell;
Existence of non-null or null values, the number or fraction of non-null and null values, binary variables indicating whether all values are non-null or null;
Other aggregations over the length of column values, e.g., sum, is there any, are all.

One of the main advantages of utilization of such statistical features in accordance with one or more embodiments disclosed herein is the ability to generalize to encoded or encrypted data. For example, consider a dataset column containing information about credit card numbers. More often than not, the actual card number is not available but instead encrypted versions are. Hence, the well-known credit card number structure and validation schemes are unavailable to infer semantic meaning. However, such encryption does not affect most statistical features as the distribution of the values is preserved.

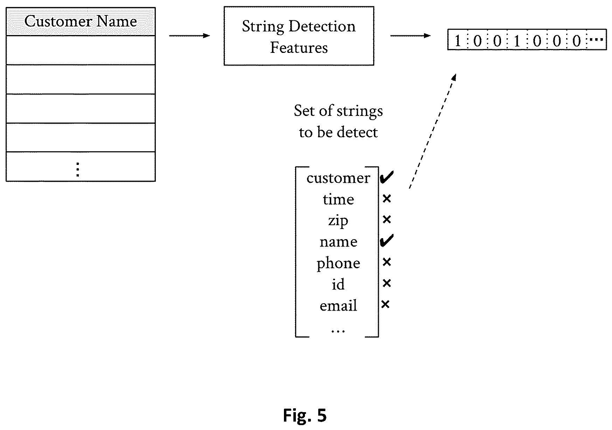

The following pertains to string detection. The string detection features are optional binary features extracted from the columns header if the user suspects or has configured the system to consider whether there are clues in the column names for further processing, there is a binary feature for each string on a user-defined list of keywords, as in **Figure 5****.** If the system is so-configured by code executing in the processor, then it can detect a keyword on the column header and, set the value of the respective binary feature to one. Otherwise, the system in this implementation sets the value to zero. Alternatively, the user can provide a regular expression (i.e., regex) instead of exact string matching.

The following pertains to multiclass classification. The Multiclass Classification Mechanism is the second of the system's two main components. Its operation includes a tuning phase before the detection phase.

The tuning phase has the system/method training a multiclass discriminative machine learning model using the training data obtained with the Feature Extraction. Persons having ordinary skill in the art are familiar with training of machine learning models, including supervised training.

Since the system/method assumes supervised training, it requires labelled samples. The user sets the labels based on the target semantic or data types. This user-defined label assignment ensures the system's general applicability.

The system/method supports hyperparameters tuning tools, such as Optuna TPESampler [8]. The search for the best hyperparameters runs on an independent set of data (a validation set) to avoid overfitting. Once the system finds the best hyperparameters, it retrains the model using the entire training set, leveraging all the available data.

Class imbalance is a common problem in the semantic type detection field, leading to poor performance for low prevalence classes. To address that problem, embodiments consistent with this disclosure include a sampling procedure that allows the generation of more training examples. For example, the sampling strategy can use bootstrapping to generate multiple random subsets of data. Alternatively, it can be based on one of the dataset columns, where different data subsets are created based on the value of a specific column or set of columns. As understood, the latter performs better due to the chances of generating high variance subsets.

Consider the following example dataset with two columns: Name and Country. The goal here is to describe the column Name using the feature extraction pipeline which produces a feature vector with a label (tag) "name" associated, as illustrated in

### Figure 6.

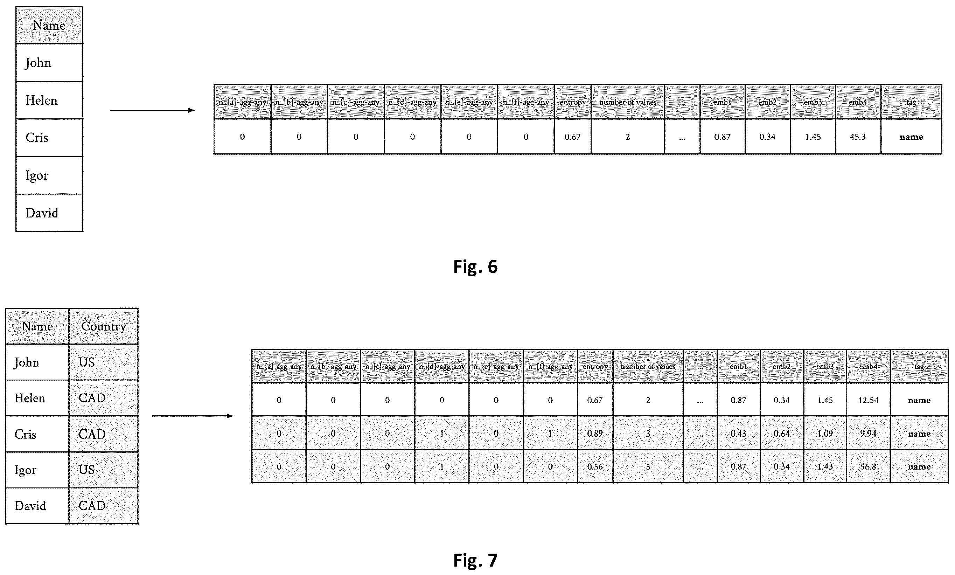

It is possible to generate more samples of the class Name by grouping it by the column Country. In this example, there are two values for this column and the programmed system, creates two distinct groups **(****Figure 7****)** to handle these values, all of which are maintained in the memory of the machine implementing the embodiment. By doing so, the number of examples of class Name is augmented from 1 to 3. This procedure can be repeated several times, varying the grouping column, but to be clear, this process is specific to the tuning phase.

The following pertains to the detection phase. The detection phase is where all the system pieces come together in order for the system to predict the semantic meaning or data type of each column of a given data set.

The data can be under sampled to accelerate detection. The sampling can be performed at the dataset or the columns level, as both Feature Extraction and Multiclass Classification are applied for each column independently. The provided dataset does not need to match the number of data samples seen in Tuning.

After sampling, the Feature Extraction module is configured by code executing in a processor to generate the feature vectors for each column, an easily parallelizable process. Once the feature vector for each column is computed, the prediction process can start: the feature vectors are provided to the Multiclass Classification module that produces a prediction for each column, as in **Figure 1****.**

The following pertains to the results. The methodology and the results of the experiments actually performed are presented. Seven real-world fraud detection transactions datasets were used from several financial verticals, namely merchants, payment processors, banks and merchant acquirers. **Table 1** describes the number of columns of each dataset, the number of samples created by the augmentation mechanism described above and the number of columns used as grouping fields for the augmentation.

Both data type and semantic type detection were performed in these examples. These two pieces of information can then be used to aid the use of an AutoML tool [1], which automatically performs the steps of data pre-processing, feature engineering, modelling and evaluation. The information provided to the AutoML module from the semantic analysis drive software which can then suggest what transformations and metrics should be computed using each dataset column during the feature engineering step, and which can automatically take such steps without manual human intervention. For example, if a column is identified as being a date the AutoML module is configured to determine that it should compute features like the day of the year, or the week of the month, which might be predictive features in a machine learning model.

The following pertains to semantic type detection performed in another experiment, the system/method is configured to detect 12 semantic types, whose distribution over all datasets is described on **Table 2.** The ground truth labels for these datasets were defined by Data Scientists with context on each dataset and stored in a memory for access by the various modules described above. One can observe that, even though all datasets are from a relatively close domain (credit card transactions), the number of columns and their semantic types are very different. Moreover, some semantic types have low prevalence, e.g. longitude.

A leave-one-out cross validation evaluation strategy was programmed and implemented by the processor in which seven models are tuned, leaving at each tuning phase one of the datasets out of the training set. This way the system can assess performance on every dataset while leveraging all data available. Although the datasets can be imbalanced, accuracy can be utilized to ensure an adequate performance measure. In order to better understand the model predictions and provide further information to the system operator, embodiments consistent with the disclosure can compute the the top-2 and top-3 prediction accuracy, that is, the accuracy including the second and third classes with the highest predicted probability, respectively.

Regarding the machine learning algorithm for the Multiclass Classification Mechanism, an implementation of Random Forest from [9] was used, as it supports multiclass classification. Hyperparameter tuning was performed on the following parameters: number of estimators, maximum depth of the estimators and minimum number of samples per leaf. The tuning was performed with a 5 fold cross validation strategy, randomly sampled from the training data using Optuna TPESampler [8] search algorithm. The best model hyperparameters vary slightly depending on the dataset left aside for testing purposes but generally the number of estimators is around 3000, maximum tree depth is around 15 and minimum samples per leaf is never greater than 3.

**Table 3** contains the results obtained for each of the seven datasets. The average accuracy ranges from 91.47% for the top-1 prediction and 97.15% for the top-3 prediction. Overall, the performance across datasets is very similar with a standard deviation of 12.38%.

The following pertains to data type detection. In this experiment the Multiclass Classification Mechanism was tuned to detect six different data types, described **in Table 4.** Here, too, the ground truth labels were provided by experienced Data Scientists with context of the datasets, and again the class distribution is very imbalanced, with classes with a very low number of examples for the classifier to learn from (e.g. integer). The evaluation and modelling approaches were the same as for the semantic type detection experiments. A leave-one out cross validation evaluation strategy was followed and hyperparameter tuning of the scikit-learn Random Forest algorithm [9] was performed using Optuna TPE Sampler [8] on a validation set randomly sampled from the training set. **Table 5** summarizes the system performance for the data type detection task. Again, the results are consistent across datasets, except for Bank 1 where the top-1 prediction accuracy is lower. Nonetheless, the standard deviation is 12.5%.

The term "comprising" whenever used in this document is intended to indicate the presence of stated features, integers, steps, components, but not to preclude the presence or addition of one or more other features, integers, steps, components or groups thereof.

Flow diagrams of particular embodiments of the presently disclosed methods are depicted in figures. The flow diagrams illustrate the functional information one of ordinary skill in the art requires to perform said methods required in accordance with the present disclosure.

It will be appreciated by those of ordinary skill in the art that unless otherwise indicated herein, the particular sequence of steps described is illustrative only and can be varied without departing from the disclosure. Thus, unless otherwise stated the steps described are so unordered meaning that, when possible, the steps can be performed in any convenient or desirable order.

It is to be appreciated that certain embodiments of the disclosure as described herein may be incorporated as code (e.g., a software algorithm or program) residing in firmware and/or on computer useable medium having control logic for enabling execution on a computer system having a hardware computer processor, such as any of the servers described herein. Such a computer system typically includes hardware memory storage devices configured to provide output from execution of the code which configures a hardware processor in accordance with the execution. The code can be arranged as firmware or software, and can be organized as a set of modules, including the various modules and algorithms described herein, such as discrete code modules, function calls, procedure calls or objects in an object-oriented programming environment. If implemented using modules, the code can comprise a single module or a plurality of modules that operate in cooperation with one another to configure the machine in which it is executed to perform the associated functions, as described herein.

The disclosure should not be seen in any way restricted to the embodiments described and a person with ordinary skill in the art will foresee many possibilities to modifications thereof.

The subject matter described above is provided by way of illustration only and should not be construed as limiting. Various combinations, alternatives, modifications and changes can be made to the subject matter described herein without following the precise contours of the exemplary embodiments and applications illustrated and described herein, which could be devised by those of ordinary skill in the art without departing from the true spirit and scope of the invention encompassed by the present disclosure. The present disclosure is intended to embrace all such combinations, alternatives, modifications and variances and the invention is defined by the set of recitations in the following claims and by structures and functions or steps which are equivalent to these recitations.

### References

[1] Paulo Marques, Miguel Araújo, Bruno Laraña, Nuno Diegues, Pedro Silva, and Pedro Bizarro. Semantic-aware feature engineering, US20200090003A1 Patent (Pending), 2019.
[2] Xin He, Kaiyong Zhao, and Xiaowen Chu. AutoML: A Survey of the State-of-the-Art.212:106622.
[3] Radwa Elshawi, Mohamed Maher, and Sherif Sakr. Automated Machine Learning: State-ofThe-Art and Open Challenges.
[4] Marc-André Zöller and Marco F. Huber. Benchmark and Survey of Automated Machine Learning Frameworks. 70:409-472.
[5] Madelon Hulsebos, Kevin Hu, Michiel Bakker, Emanuel Zgraggen, Arvind Satyanarayan, Tim Kraska, Cagatay Demiralp, and César Hidalgo. Sherlock: A deep learning approach to semantic data type detection. In Proceedings of the 25th ACM SIGKDD International Conference on Knowledge Discovery & Data Mining, pages 1500-1508, 2019.
[6] Dan Zhang, Yoshihiko Suhara, Jinfeng Li, Madelon Hulsebos, Cagatay Demiralp, and Wang-Chiew Tan. Sato: Contextual semantic type detection in tables. arXiv preprint arXiv:1911.06311, 2019.
[7] Tomas Mikolov, Kai Chen, Greg Corrado, and Jeffrey Dean. Efficient estimation of word representations in vector space. arXiv preprint arXiv:1301.3781, 2013.
[8] Takuya Akiba, Shotaro Sano, Toshihiko Yanase, Takeru Ohta, and Masanori Koyama. Optuna: A Next-generation Hyperparameter Optimization Framework. In Proceedings of the 25th ACM SIGKDD International Conference on Cournapeau, M. Brucher, M. Perrot, and E. Duchesnay. Scikit-learn: Machine Learning in Python. Journal of Machine Learning Research, 12:2825-2830, 2011.
[9] Knowledge Discovery and Data Mining, 2019. F. Pedregosa, G. Varoquaux, A. Gramfort, V. Michel, B. Thirion, O. Grisel, M. Blondel, P. Prettenhofer, R. Weiss, V. Dubourg, J. Vanderplas, A. Passos, D.

## Claims

1. A computer-implemented method for obtaining a datasource schema comprising column-specific data-types and/or semantic-types, from received tabular data records with values arranged in rows and columns, said method comprising:
extracting a feature vector record comprising type recognition features for each of one or more columns of the received input tabular records;
feeding the extracted feature vector records to a pretrained type classification discriminative machine learning model; and
using said model for classifying each extracted feature vector record of a corresponding column of received input tabular records into an estimated data-type and/or semantic-type, respectively, of the corresponding column.

2. The computer-implemented method according to claim 1, wherein each column of received input tabular records comprises a column header and a column body, and wherein the feature vector record comprises type recognition features extracted from a corresponding column header.

3. The computer-implemented method according to claim 1 or 2, wherein each column of received input tabular records comprises a column header and a column body, and
wherein the feature vector record comprises type recognition features extracted from a corresponding column body.

4. The computer-implemented method according to claim 2 and 3, wherein each column of received input tabular records comprises a column header and a column body,
wherein each feature vector record comprises a concatenation of a header feature vector record and a body feature vector record,
wherein the header feature vector record comprises type recognition features extracted from a corresponding column header, and
wherein the body feature vector record comprises type recognition features extracted from a corresponding column body.

5. The computer-implemented method according to any of the previous claims, wherein the type recognition features comprise character level features obtained from counting printable and/or special characters present in a corresponding column, in particular the character level features being obtained from counting printable and/or special characters present in a corresponding column header and/or body, in particular printable characters are selected from the group consisting of: punctuation, digits, letters, ASCII characters, whitespace characters, and combinations thereof.

6. The computer-implemented method according to any of the previous claims, wherein the type recognition features comprise regex detection features obtained from calculating one or more statistics calculated from regular expression, also referred as regex, pattern matching of text elements in a corresponding column, in particular one or more statistics calculated from a binary vector of regex expression matching for each text element in the column body, in particular, wherein the statistics are selected from the group consisting of: minimum and maximum values, mean, median, mode, range, variance, interquartile range, skewness, kurtosis, sum, and combinations thereof.

7. The computer-implemented method according to any of the previous claims, wherein the type recognition features comprise statistical features obtained from one or more of the list comprising: calculating one or more statistics calculated from a corresponding column, in particular one or more statistics calculated from counting unique values and null values, counting numeric values and text values, counting characters of numeric values and of text values, counting number of words in text values, counting null values and non-null values, and/or verifying if all values are null or if all values are non-null, or in particular one or more statistics being obtained from a corresponding column header and/or body, or in particular wherein statistics comprise minimum and maximum values, mean, median, mode, range, variance, interquartile range, skewness, kurtosis, or sum, or combinations thereof.

8. The computer-implemented method according to any of the previous claims, wherein the type recognition features comprise word embedding features, obtained from fetching an embedding vector for each of one or more words present in a corresponding column from a predetermined word embedding dictionary, to obtain word embedding features, in particular the word embedding features being obtained from fetching an embedding vector for each of one or more words present in a corresponding column body and/or header.

9. The computer-implemented method according to the previous claim, wherein the type recognition features comprise word embedding features, obtained from fetching an embedding vector for each of one or more words present in a corresponding column from a predetermined word embedding dictionary; calculating one or more statistics from the fetched embedding vectors; and concatenating the calculated statistics to obtain the word embedding features; in particular the statistics including average, standard, deviation, median, or mode, or combinations thereof, in particular the feature vector record being the body feature vector record.

10. The computer-implemented method according to claim 8 or 9 comprising, if more than one word is present for each value of the corresponding column body, averaging the fetched embedding vectors for each value of the corresponding column body to obtain word embedding features.

11. The computer-implemented method according to any of the previous claims, wherein the type recognition features comprise a binary feature extracted from a header of a corresponding column, wherein said binary feature is obtained by detecting if a keyword from a predetermined ordered list of keywords is present.

12. A computer-implemented method for training a machine learning model for obtaining a datasource schema comprising column-specific data-types and/or semantic-types, from received tabular data records with values arranged in rows and columns, said method comprising:
extracting a feature vector record comprising type recognition features for each of one or more columns of the received input tabular records;
feeding the extracted feature vector records to a pretrained type classification discriminative machine learning model;
using said model for classifying each extracted feature vector record of a corresponding column of received input tabular records into an estimated data-type and/or semantic-type, respectively, of the corresponding column.

13. The computer-implemented method according to claim 12, said method further comprising:
grouping the received input tabular records into groups defined by one or more of the columns of the received input tabular records;
extracting a feature vector record comprising type recognition features for each of one or more columns and for each of group of the received input tabular records;
feeding the extracted feature vector records to a pretrained type classification discriminative machine learning model;
using said model for classifying each extracted feature vector record of a corresponding column of received input tabular records into an estimated data-type and/or semantic-type, respectively, of the corresponding column.

14. A computer system for obtaining a datasource schema comprising column-specific data-types and/or semantic-types, from received tabular data records with values arranged in rows and columns, said system comprising an electronic data processor configured to:
extract a feature vector record comprising type recognition features for each of one or more columns of the received input tabular records;
feed the extracted feature vector records to a pretrained type classification discriminative machine learning model; and
use said model for classifying each extracted feature vector record of a corresponding column of received input tabular records into an estimated data-type and/or semantic-type, respectively, of the corresponding column.

15. A computer program product embodied in a non-transitory computer-readable medium comprising computer program instructions, which when executed by a computer processor, cause the computer processor to carry out the method of any of the claims 1-13.
